# EUROPEAN PATENT APPLICATION

(11) **EP 4 575 220 A1**
(43) Date of publication of application: **25.06.2025**
(21) Application number: 23020569.2
(22) Date of filing: 22.12.2023
(51) Int. Cl.: F03D 1/04

(54) **FLUID ELECTRIC GENERATOR**

(71) Applicant: Driza, Algert, Dermenas Municipality (AL)
(72) Inventor: Driza, Algert, Fie Dermenas municipality (AL)
(74) Representative: Wittmann, Günther

(57) **Abstract**

The invention discloses a fluid electric generator, comprising:
- a first tube having a first diameter;
- a second tube having a second diameter and fluid-tight connected with the first tube, wherein the first diameter is larger than the second diameter;
- a fan having a plurality of blades and arranged in the first tube;
- a motor driving the fan;
- a worm shaft arranged in the second tube;
- an alternator coupled with the worm shaft.

## Description

### Field of the Invention

The present invention relates to a fluid electric generator.

### Brief Description of the Invention

The object of the invention is to convert energy.

The object of the present invention is solved by a fluid electric generator according to claim 1. The dependent claims relate to preferred embodiments.

The invention discloses a fluid electric generator comprising a first tube having a first diameter and a second tube having a second diameter. The second tube is fluid-tight connected with the first tube. The first diameter is larger than the second diameter. The fluid electric generator further comprises a fan having a plurality of blades and arranged in the first tube. A motor is adapted to drive the driving the fan. A worm shaft arranged in the second tube. An alternator coupled with the worm shaft.

The fluid electric generator has a high degree of efficiency, since a fluid passes a long way along the worm shaft. As the fluid passes through the worm shaft, the fluid starts oscillations that propel the worm shaft.

The motor may drive the fan such that the fluid flows from the second tube to the first tube.

The fluid is a gas, particularly air.

The worm shaft may have at least three windings, preferably at least six windings, more preferred at least eight windings.

The first tube and the second tube may be arranged concentrically.

The central axis of the fan and the central axis of the worm shaft are arranged concentrically.

The motor driving the fan may be an electric motor.

The central axis of the fan may be concentric with the central axis of the first tube.

The central axis of the worm shaft may be concentric with the central axis of the second tube.

### Brief Description of the Drawings

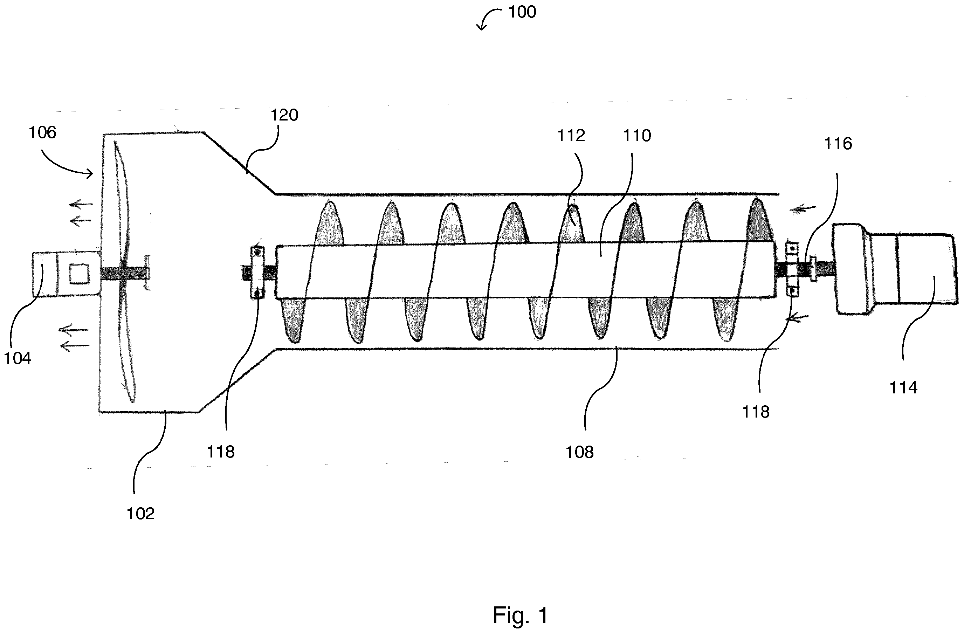

The invention is now described in more detail with reference to the appended drawing showing a non-limiting embodiment of the invention, wherein
Figure 1 shows a schematic cross section of the fluid electric generator according to the present invention.

### Detailed Description of the Invention

Reference is made to figure 1 showing schematic cross section of the fluid electric generator 100 according to the present invention. The dimensions are not limiting.

The fluid electric generator 100 comprises a first tube 102 having a first diameter and a second tube 104 having a second diameter, wherein the first diameter is larger than the second diameter. The first tube 102 and the second tube 104 are connected fluid-tight by a funnel-shaped portion 120.

In the first tube 102 a fan 106 having a plurality of blades is arranged. The fan 106 is driven by a motor 102. The motor can be any type of motor such as a combustion engine or an electric motor. The motor may have a power of approximately 10 kW.

In the second tube 104 a worm shaft 110 is arranged on an axis 116. The axis 116 is supported by two supports 118. On the worm shaft 110 a helix 112 having a plurality of windings is arranged.

The axis 116 is connected with an alternator 114. The axis may rotate between 20 to 3000 rpm. The alternator may have a power of up to 50 kW.

In operation the rotating fan 106 draws air into the second pipe 108 along the worm shaft 110. The air passes from the second tube 108 to the first tube 102 and is pressed by the fa out of the first tube 102.

The air passing along the worm shaft 110 and rotates the worm shaft 110. The worm shaft 110 rotates the axis 116. The axis 116 rotates a rotor (not shown) of the alternator 114. Thereby, coils (not shown) of the alternator 114 arranged around the rotor generate electric power.

## Claims

1. A fluid electric generator, comprising:
- a first tube having a first diameter;
- a second tube having a second diameter and fluid-tight connected with the first tube, wherein the first diameter is larger than the second diameter;
- a fan having a plurality of blades and arranged in the first tube;
- a motor driving the fan;
- a worm shaft arranged in the second tube;
- an alternator coupled with the worm shaft.

2. The fluid electric generator according to claim 1, wherein the motor drives the fan such that the fluid flows from the second tube to the first tube.

3. The fluid electric generator according to claim 1 or 2, wherein the fluid is air.

4. The fluid electric generator according to any one of claims 1 to 3, wherein the worm shaft comprises at least three windings, preferably at least six windings, more preferred at least eight windings.

5. The fluid electric generator according to any one of claims 1 to 4, wherein the first tube and the second tube are arranged concentrically.

6. The fluid electric generator according to any one of claims 1 to 5, wherein the central axis of the fan and the central axis of the worm shaft are arranged concentrically.

7. The fluid electric generator according to any one of claims 1 to 6, wherein the motor driving the fan is an electric motor.

8. The fluid electric generator according to any one of claims 1 to 7, wherein the central axis of the fan is concentric with the central axis of the first tube.

9. The fluid electric generator according to any one of claims 1 to 8, wherein the central axis of the worm shaft is concentric with the central axis of the second tube.
